# EUROPEAN PATENT SPECIFICATION

(11) **EP 3 760 503 B1**
(45) Date of publication and mention of the grant of the patent: **28.12.2022**
(21) Application number: 20184118.6
(22) Date of filing: 06.07.2020
(51) Int. Cl.: B60T 7/08, B60T 13/22

(54) **IMPROVED HYDRAULIC BRAKE ARRANGEMENT FOR AN OFF-ROAD VEHICLE**
VERBESSERTE HYDRAULISCHE BREMSANORDNUNG FÜR EIN GELÄNDEFAHRZEUG
AGENCEMENT DE FREINAGE HYDRAULIQUE AMÉLIORÉ POUR VÉHICULE TOUT-TERRAIN

(30) Priority: 05.07.2019 IT 201900010989
(43) Date of publication of application: 06.01.2021
(73) Proprietor: CNH Industrial Italia S.p.A., 10135 Torino (IT)
(72) Inventor: Borretti, Biagio, 41124 Modena (MO) (IT); Ciarrocchi, Marco Pietro, 64027 Sant'Omero (TE) (IT)
(74) Representative: CNH Industrial IP Department

(56) References cited:
- EP-A1- 2 982 555
- EP-A2- 1 281 592
- WO-A1-2017/068083
- WO-A2-2009/156833
- GB-A- 2 112 481
- JP-A- 2004 217 009
- US-A- 5 370 449
- US-B1- 6 168 244

## Description

### TECHNICAL FIELD

The present invention concerns a hydraulic brake arrangement, in particular a hydraulic brake arrangement for controlling a spring applied hydraulically released (SAHR) brakes.

### BACKGROUND OF THE INVENTION

SAHR brakes are widely used in off-road vehicles such as agricultural vehicle. A known SAHR braking arrangement is disclosed in prior art document WO 2017068084 A1.

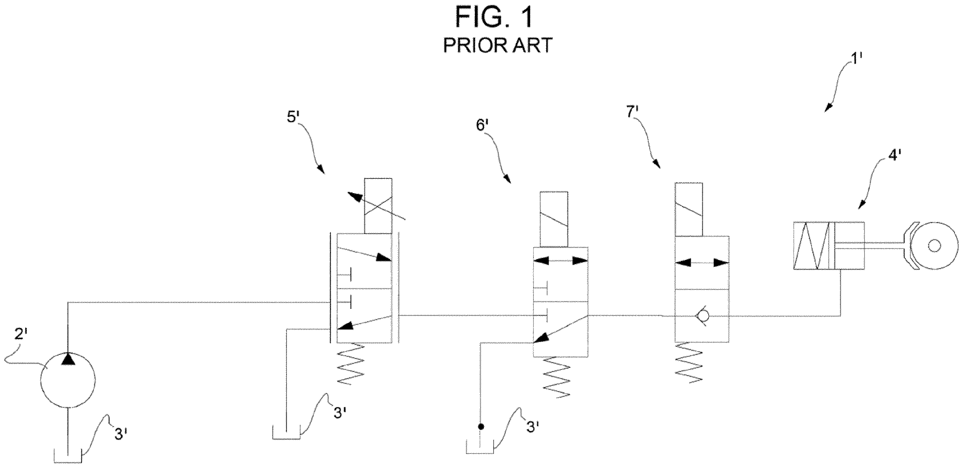

In the above document it is shown a hydraulic brake arrangement 1' for controlling a SAHR brake 4' as shown in Figure 1 and essentially comprising a pump 2' fluidly connected to a source of fluid 3'. Pump 2' is configured to supply fluid in pressure to SAHR brake 4' via a in-series connected control valves 5', 6'. 7'.

Valve 5' is a proportional valve configured to assume a first position into which fluid can flow to SAHR brake 4' or a second position into which fluid can flow to source 3'. Valve 5' is a solenoid-actuated valve, normally positioned by a biasing spring into its second position.

Valve 6' is a valve configured to assume a first position into which fluid can flow between SAHR brake 4' and valve 5' or a second position into which fluid can flow to source 3'. Valve 5' is a solenoid-actuated valve, normally positioned by a biasing spring into its second position.

A control unit may be programmed to control valves 5', 6' so as to regulate fluid flow to SAHR brake 3' in accordance with operational requirements.

Valve 7' is a valve configured to assume a first position into which fluid can flow between SAHR brake 4' and valve 56' or a second position into fluid cannot pass from SAHR brake 4' to valve 6'; in synthesis, it acts as a one-way valve during normal operation of the vehicle and solenoid acts during braking phases to allow fluid to go to discharge via valve 5'.

According to the disclosed arrangement, in the event of a power failure engagement of the SAHR brake 3' (i.e. its suddenly discharge) is prevented because it is not possible for this latter to be connected to source 3' because of second position of valve 7'. Brake may be activate by other system, e.g. safety mechanical levers which drive valve 7' to its first position against spring force.

However, even if the above system is an effective and economic system for managing a SAHR brake, it suffers of some inconvenient.

Indeed, valve 7' has to be maintained during all braking operation of the vehicle in an activated state, i.e. solenoid which maintains this latter against spring force is always activated, with a related power consumption.

Accordingly, during an inching phase of the vehicle, valve 7' would be activated for all the operation so as to allow valves 5' and 6' to modulate braking of the vehicle.

Since it is more and more required to activate inching functionality of tractors remotely, it is necessary to have electronic actuation of valves of the SAHR brake arrangement so that these latter may be actuated by remote. However such electronic actuation must comply with safety requirements of ISO 25119. For example, in inching operation, it could be useful to brake the vehicle, since velocities are low and the vehicle may be on an inclined plane. WO2017068083 discloses a hydraulic brake arrangement for controlling a SAHR brake as shown in Figure 1 and essentially comprising a pump fluidly connected to a source of fluid. Pump is configured to supply fluid in pressure to SAHR brake via in-series connected control valves. WO2009156833 discloses a brake assembly comprises a pressure reservoir, a brake actuator, a discharge unit and a brake element and a valve unit that is hydraulically connected to the pressure reservoir.

In view of the above, the need is felt to provide a brake arrangement configured to allow a possibly remote brake during inching phase of the vehicle, while maintaining fail-safe brake characteristic in case of electronic/software failures.

Furthermore, it is required a brake arrangement which is economic and which does not substantially modifies existing layouts.

An aim of the present invention is to satisfy the above mentioned needs.

### SUMMARY OF THE INVENTION

The aforementioned aim is reached by a vehicle braking arrangement as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 discloses a schematic circuit of a hydraulic brake arrangement as known in the prior art;
- Figure 2 discloses a schematic circuit of hydraulic brake arrangement according to a first embodiment of the invention;
- Figure 3 discloses a schematic circuit of hydraulic brake arrangement according to a second embodiment of the invention; and
- Figure 4 discloses a schematic circuit of hydraulic brake arrangement according to a third embodiment of the invention.

### DETAILED DESCRIPTION OF THE INVENTION

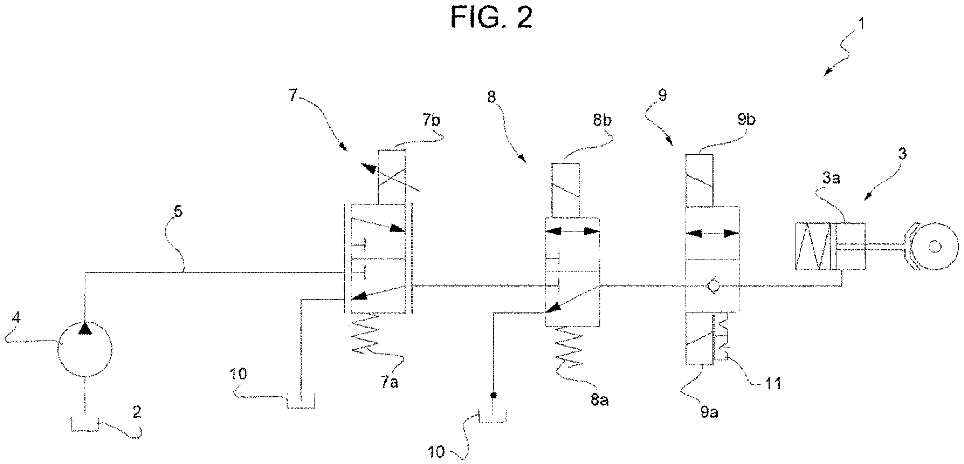

Figure 2 discloses a first embodiment of the hydraulic brake arrangement for a hydraulic brake arrangement 1 according to the invention, this latter essentially comprises a source of fluid 2, a hydraulic brake 3 and a pump 4 configured to make fluid flow in pressure from source 2 to hydraulic brake 3, e.g. a SAHR brake of known type.

In greater detail, fluid flows from source 2 to brake 3 through a conduit 5 which fluidly connected outlet of pump 4 with an inlet of a cylinder 3a of brake 3. Hydraulic brake 3 comprises elastic means 6 inside cylinder 3a so that, if fluid flows into cylinder 3a, brake is released, while if fluid flows out cylinder 3a, brake is engaged.

Arrangement 1 comprises, in fluidic series along conduit 5, three valves 7, 8, 9 configured to control the flow of fluid from pump 4 to brake 3 and, accordingly, operation of brake 3.

In greater detail a first valve 7 is the first valve downstream with respect to pump 4 and upstream with respect to second valve 8 and it is a proportionally electro-actuated valve configured to manage a flow of fluid from pump 4 to brake 3 or from brake 3 towards a discharge 10.

More preferably first valve 7 is a three ways - two position valves configured to assume a first position into which fluid may flow from pump 4 towards second valve 8 and a second position into which fluid may flow from second valve 8 towards discharge 10. Advantageously, first valve 7 is maintained in second position by an elastic element 7a acting against a force imparted by a solenoid 7b which may be obviously electrically controlled by an electronic control unit of the vehicle.

Second valve 8 is fluidically interposed between first valve 7 and third valve 9 and is an electro-actuated valve configured to allow fluidic communication between first valve 7 and third valve 9 or to allows passage of fluid from third valve 9 towards discharge 10.

More preferably second valve 8 is a three ways - two position valves configured to assume a first position into which fluid may flow between first valve 7 and third valve 9 and a second position into which fluid may flow from third valve 9 towards discharge 10. Advantageously, second valve 8 is maintained in second position by an elastic element 8a acting against a force imparted by a solenoid 8b which may be obviously electrically controlled by an electronic control unit of the vehicle.

Third valve 9 is the first valve upstream with respect to brake 3 and downstream with respect to second valve 8 and it is a electro-actuated valve configured to manage a flow of fluid between brake 3 and second valve 8 or from this latter towards brake 3.

More preferably third valve 9 is a three ways - two position valves configured to assume a first position into which fluid may flow between brake 3 and second valve 8 and a second position into which fluid may flow only from second valve 8 towards brake 3.

According to the invention, third valve 9 is a bi-stable valve, i.e. is configured to maintain a selected state unless it receives an opposite signal to switch position.

In particular, third valve 9 comprises a first solenoid 9a and a second solenoid 9b acting on opposite sides of spool of third valve 9 and a mechanical detent 11 configured to maintain third valve 9 in its selected position by first or second solenoid 9a, 9b.

The operation of the above described first embodiment of the arrangement 1 according to the invention is the following.

In a normal mode of operation of the brake system, third valve 9 is actuated by first solenoid 9a in the position in fig.2 and first and second valves 7, 8 are mainly in their first positions and are modulated by related solenoid 7b, 8b so as to manage flow of fluid flowing from pump 4 towards brake 3, managing its action on the vehicle. The mechanical detent 11 maintain such position without the need of a constant actuation of first solenoid 9a.

In a fault condition of the electronic system, fluid cannot flow from brake 3 towards discharges 10 because of the one-way action of third valve 9.

In an inching mode of operation of the vehicle, third valve is actuated by second solenoid 9b in its second position; thanks to mechanical detent 11, it maintains its position without need of constant actuation of second solenoid 9b.

Accordingly, if valves 7 and 8 may be modulated to control tractor's inching; if a fault condition of the electronic system occurs fluid can flow from brake 3 towards discharges 10 thereby braking the vehicle which is already at low velocity.

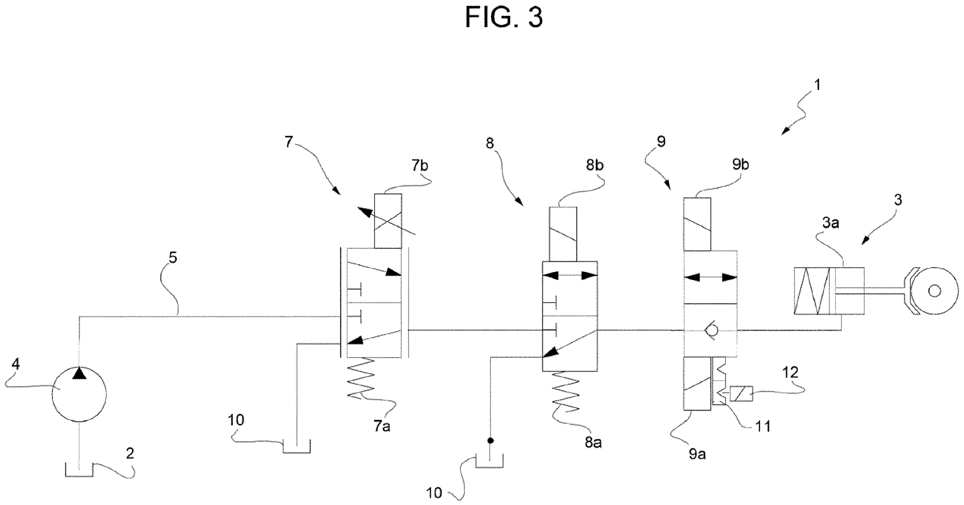

Figure 3 discloses a second embodiment of the hydraulic brake arrangement for a hydraulic brake arrangement 1 according to the invention, which differentiates from the first embodiment of figure 2 by the fact of comprising a electrically controlled detent by which a selection coil 12.

Accordingly, position of detent 11 cannot be unlocked without energizing coil 12.

The operation of the above described second embodiment of the arrangement 1 according to the invention is substantially the same as in the first embodiment.

However, it may happen that mechanical detent 11 may move because of force acting on spool of third valve 9 caused by fluid flow.

Accordingly, movement of mechanical detent 11 is allows only is coil 12 is actuated. Accordingly, when valve is switched in inching operation position, coil 12 is un-energized so that mechanical detent 11 cannot move.

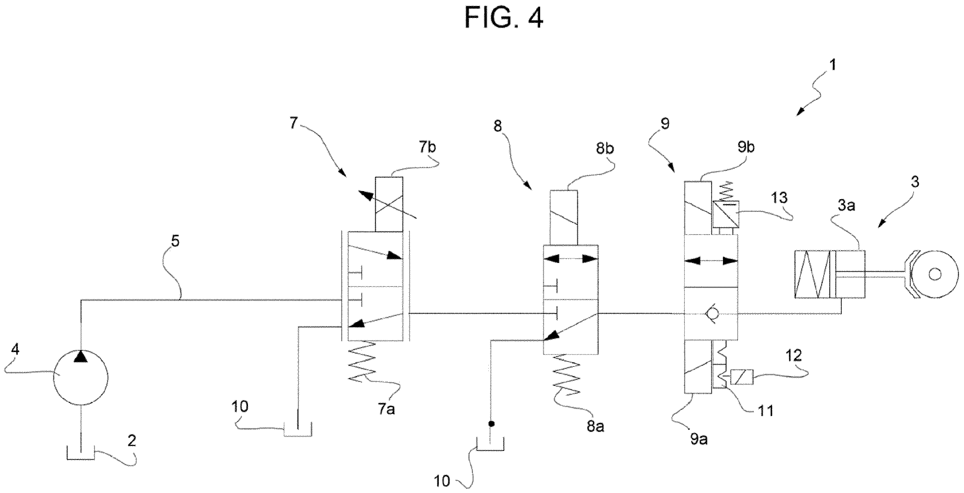

Figure 4 discloses a third embodiment of the hydraulic brake arrangement for a hydraulic brake arrangement 1 according to the invention, which differentiates from the second embodiment of figure 3 by the fact of comprising a feedback position control on electrically controlled detent.

In particular, valve 9 comprises a feedback position switch 13 configured to allow energization of selection coil 12 only when valve 9 is in its first position.

The operation of the above described third embodiment of the arrangement 1 is substantially the same as the operation of the second embodiment. However, it is furthermore present an electrical control, e.g. a closed loop control, thanks to switch 13. In particular, switch 13 detects that first position of third valve 9 is correctly reached and maintained. If, for any reason, third valve 9 moves, switch 13 is configured to generate an electronic signal configured to lock inching operation of the tractor or to act on selection solenoid 12 to lock detent 11.

In view of the foregoing, the advantages of a hydraulic brake arrangement 1 according to the invention are apparent.

Thanks to the proposed arrangement 1 is possible to control brake 3 during inching operation of the vehicle without substantially modifying existing layout.

Furthermore, the use of a bistable valve allows to reduce power consumption since both solenoids 9a, 9b do not use electric power after switch of valve 9, which is maintained in its position by mechanical detent 11.

The optional use of a electronic detent 11 controlled by a selection coil 12 allows to further improve safety of the proposed innovative layout.

Furthermore, such safety is again increased thanks to the use of a selection switch 13 which can stop inching function of the vehicle and/or control selection coil 12 if valve 9 selected position is not maintained correctly.

It is clear that modifications can be made to the described hydraulic brake arrangement 1 which do not extend beyond the scope of protection defined by the claims.

## Claims

1. Hydraulic brake arrangement (1) for controlling a brake (3) of a vehicle, said arrangement (1) comprising a pump (4) configured to suck fluid from a source of fluid (2) towards said brake (3) via a conduit (5) and a first, a second and a third valves (7, 8, 9) fluidly interposed in series on said conduit (5),
said first valve (7) being an electro-actuated valve configured to assume a first position into which it allows passage of fluid from said pump (4) towards said second valve (8) and a second position into which it allows passage of fluid from said second valve (8) to a discharge (10),
said second valve (8) being an electro-actuated valve configured to assume a first position into which it allows passage of fluid between said first and third valves (7, 9) and a second position into which it allows passage of fluid from said second valve (8) to a discharge (10),
said third valve (9) being an electro-actuated bistable valve configured to assume a first position into which it allows passage of fluid between said second valve (8) and said brake (3) and a second position into which it allows passage of fluid only from said second valve (8) to said brake (3) wherein said third valve (9) comprises a first and second solenoids (9a, 9b) acting on opposite sides of spool of said third valve (9),
said third valve (9) further comprises a mechanical detent (11) configured to maintain said valve in the selected position,
wherein said mechanical detent (11) is electro-actuated, and
**characterized in that**
said third valve (9) comprises a selection coil (12) configured to allow movement of said electro-actuated mechanical detent (11).

2. Hydraulic brake arrangement according to any of the preceding claims, wherein said third valve (9) comprises a feedback position switch (13) configured to generate an electronic signal configured to lock inching operation of said vehicle or to act on selection solenoid (12) to lock said detent (11) when said third valve (9) moves.

3. Hydraulic brake arrangement according to claim 2 wherein said feedback position switch (13) is configured to monitor and control said selection coil (12).

4. Hydraulic brake arrangement according to any of the preceding claims, wherein at least one between said first and second valves (7,8) is a proportional valve.

5. Hydraulic brake arrangement according to any of the preceding claims wherein said brake (3) is a SAHR brake.

## Patentansprüche

1. Hydraulische Bremsanordnung (1) zum Steuern einer Bremse (3) eines Fahrzeuges, wobei die Anordnung (1) eine Pumpe (4), die zum Ansaugen eines Fluids von einer Fluidquelle (2) in Richtung der Bremse (3) über eine Leitung (5) eingerichtet ist, und ein erstes, ein zweites und ein drittes Ventil (7, 8, 9) umfasst, die fluidisch in Reihe in der Leitung (5) eingefügt sind,
wobei das erste Ventil (7) ein elektrisch betätigtes Ventil ist, das dazu eingerichtet ist, eine erste Position, in welcher es einen Durchfluss von Fluid von der Pumpe (4) in Richtung des zweiten Ventils (8) ermöglicht, und eine zweite Position, in welcher es einen Durchfluss von Fluid von dem zweiten Ventil (8) zu einem Ablauf (10) ermöglicht, anzunehmen,
wobei das zweite Ventil (8) ein elektrisch betätigtes Ventil ist, das dazu eingerichtet ist, eine erste Position, in welcher es einen Durchfluss von Fluid zwischen dem ersten und dem dritten Ventil (7, 9) ermöglicht, und eine zweite Position, in welcher es einen Durchfluss von Fluid von dem zweiten Ventil (8) zu einem Ablauf (10) ermöglicht, anzunehmen,
wobei das dritte Ventil (9) ein elektrisch betätigtes bistabiles Ventil ist, das dazu eingerichtet ist, eine erste Position, in welcher es einen Durchfluss von Fluid zwischen dem zweiten Ventil (8) und der Bremse (3) ermöglicht, und eine zweite Position, in welcher es einen Durchfluss von Fluid nur von dem zweiten Ventil (8) zu der Bremse (3) ermöglicht, anzunehmen,
wobei das dritte Ventil (9) einen ersten und einen zweiten Elektromagnet (9a, 9b) umfasst, die auf gegenüberliegenden Seiten der Spule des dritten Ventils (9) wirken,
wobei das dritte Ventil (9) weiterhin eine mechanische Arretierung (11) umfasst, die dazu eingerichtet ist, das Ventil in der gewählten Position zu halten,
wobei die mechanische Arretierung (11) elektrisch betätigt ist, und
**dadurch gekennzeichnet, dass**
das dritte Ventil (9) eine Wahlspule (12) umfasst, die dazu eingerichtet ist, eine Bewegung der elektrisch betätigten mechanischen Arretierung (11) zu ermöglichen.

2. Hydraulische Bremsanordnung nach einem der vorherigen Ansprüche, wobei das dritte Ventil (9) einen Regelkreis-Positionsschalter (13) umfasst, der dazu eingerichtet ist, ein elektrisches Signal zu erzeugen, das dazu eingerichtet ist, einen Anfahrbetrieb des Fahrzeuges zu sperren oder auf den Wahlelektromagnet (12) zu wirken, um die Arretierung (11) zu sperren, wenn sich das dritte Ventil (9) bewegt.

3. Hydraulische Bremsanordnung nach Anspruch 2, wobei der Regelkreis-Positionsschalter (13) dazu eingerichtet ist, die Wahlspule (12) zu überwachen und zu steuern.

4. Hydraulische Bremsanordnung nach einem der vorherigen Ansprüche, wobei mindestens eines aus dem ersten und dem zweiten Ventil (7, 8) ein Proportionalventil ist.

5. Hydraulische Bremsanordnung nach einem der vorherigen Ansprüche, wobei die Bremse (3) eine SAHR-Bremse ist.

## Revendications

1. Dispositif de freins hydrauliques (1) pour commander un frein (3) d'un véhicule, ledit dispositif (1) comprenant une pompe (4) configurée pour aspirer du fluide d'une source de fluide (2) vers ledit frein (3) via un conduit (5) et une première, une deuxième et une troisième soupapes (7, 8, 9) interposées fluidiquement en série sur ledit conduit (5),
ladite première soupape (7) étant une soupape électro-actionnée configurée pour assumer une première position dans laquelle elle permet le passage de fluide de ladite pompe (4) vers ladite deuxième soupape (8) et une seconde position dans laquelle elle permet le passage de fluide de ladite deuxième soupape (8) vers une évacuation (10),
ladite deuxième soupape (8) étant une soupape électro-actionnée configurée pour assumer une première position dans laquelle elle permet le passage de fluide entre lesdites première et troisième soupapes (7, 9) et une seconde position dans laquelle elle permet le passage de fluide de ladite deuxième soupape (8) vers une évacuation (10),
ladite troisième soupape (9) étant une soupape bistable électro-actionnée configurée pour assumer une première position dans laquelle elle permet le passage de fluide entre ladite deuxième soupape (8) et ledit frein (3) et une seconde position dans laquelle elle permet le passage de fluide uniquement de ladite deuxième soupape (8) vers ledit frein (3)
dans lequel ladite troisième soupape (9) comprend un premier et second solénoïdes (9a, 9b) agissant sur les côtés opposés de la bobine de ladite troisième soupape (9),
ladite troisième soupape (9) comprend en outre un blocage mécanique (11) configuré pour maintenir ladite soupape dans la position sélectionnée,
dans lequel ledit blocage mécanique (11) est électro-actionné, et
**caractérisé en ce que**
ladite troisième soupape (9) comprend une bobine de sélection (12) configurée pour permettre le mouvement dudit blocage mécanique électro-actionné (11).

2. Dispositif de freins hydrauliques selon l'une quelconque des revendications précédentes, dans lequel ladite troisième soupape (9) comprend un interrupteur de position à rétroaction (13) configuré pour générer un signal électronique configuré pour verrouiller une opération dudit véhicule ou pour agir sur le solénoïde de sélection (12) pour verrouiller ledit blocage (11) lorsque ladite troisième soupape (9) se déplace.

3. Dispositif de freins hydrauliques selon la revendication 2, dans lequel ledit interrupteur de position à rétroaction (13) est configuré pour surveiller et commander ladite bobine de sélection (12).

4. Dispositif de freins hydrauliques selon l'une quelconque des revendications précédentes, dans lequel au moins une parmi lesdites première et deuxième soupapes (7, 8) est une soupape proportionnelle.

5. Dispositif de freins hydrauliques selon l'une quelconque des revendications précédentes, dans lequel ledit frein (3) est un frein SAHR.
